(19) Europäisches Patentamt / European Patent Office / Office européen des brevets

(11) **EP 4 707 047 A1**

(12) **EUROPEAN PATENT APPLICATION**

(43) Date of publication:
**11.03.2026 Bulletin 2026/11**

(21) Application number: **25186597.8**

(22) Date of filing: **01.07.2025**

(51) International Patent Classification (IPC):
**B60L 53/18** (2019.01)   **H02G 11/00** (2006.01)
**B60L 53/31** (2019.01)

(52) Cooperative Patent Classification (CPC):
**H02G 11/003; B60L 53/18;** B60L 53/31; Y02T 10/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.07.2024   CN 202410875567**

(71) Applicant: **Huawei Digital Power Technologies
Co., Ltd.
Shenzhen, Guangdong 518043 (CN)**

(72) Inventors:
• **LI, Hengqu**
  **Shenzhen, 518043 (CN)**
• **HUANG, Biao**
  **Shenzhen, 518043 (CN)**
• **ZHANG, Xuechao**
  **Shenzhen, 518043 (CN)**
• **LI, Song**
  **Shenzhen, 518043 (CN)**
• **MEI, Wanjuan**
  **Shenzhen, 518043 (CN)**

(74) Representative: **Gill Jennings & Every LLP
The Broadgate Tower
20 Primrose Street
London EC2A 2ES (GB)**

(54) **PLUG CABLE MANAGEMENT APPARATUS AND CHARGING PILE**

(57)    This application relates to the field of charging pile technologies, and in particular, to a plug cable management apparatus and a charging pile. The plug cable management apparatus includes a bracket, a cantilever structure, a pull rope, and a spring balancer. The bracket is configured to be fastened on a charging pile. The cantilever structure includes a cantilever beam and a mounting member, the cantilever beam has a rotating end and a swing end, the rotating end of the cantilever beam is rotatably connected to the bracket around a first axis, the first axis is perpendicular to a horizontal direction, the mounting member is installed on the swing end of the cantilever beam, and the mounting member is configured to mount a charging cable of the charging pile. The spring balancer is fastened on the bracket, and the spring balancer is configured to output a traction force. One end of the pull rope is connected to a traction force output end of the spring balancer, and the other end of the pull rope is connected to the swing end of the cantilever beam.

FIG. 2

EP 4 707 047 A1

## Description

### TECHNICAL FIELD

This application relates to the field of charging pile technologies, and in particular, to a plug cable management apparatus and a charging pile.

### BACKGROUND

With rapid development of the new energy industry, to adapt to a plurality of electric vehicle models and provide a high-power and large-current charging function, a length, a radial size, and mass of a charging cable of a charging pile gradually increase, which brings problems that may cause quality and safety risks, including but not limited to pressure on the cable, friction with the ground, and soaking, increases difficulty in managing the charging cable, and affects charging experience of a consumer.

### SUMMARY

This application provides a plug cable management apparatus and a charging pile, to expand a charging range, reduce a pulling force that a user needs to exert during a charging operation, and optimize charging experience.

According to a first aspect, this application provides a plug cable management apparatus. The plug cable management apparatus may be applied to charging cable management of a charging pile. The plug cable management apparatus includes a bracket, a cantilever structure, a pull rope, and a spring balancer. The bracket is configured to be fastened on a charging pile, and the bracket may provide support for the cantilever structure, the pull rope, and the spring balancer. The cantilever structure includes a cantilever beam and a mounting member, the cantilever beam has a rotating end and a swing end, the rotating end of the cantilever beam is rotatably connected to the bracket around a first axis, the first axis is perpendicular to a horizontal direction, the mounting member is installed on the swing end of the cantilever beam, and the mounting member is configured to mount a charging cable of the charging pile. The spring balancer is fastened on the bracket, and the spring balancer is configured to output a traction force. One end of the pull rope is connected to a traction force output end of the spring balancer, and the other end of the pull rope is connected to the swing end of the cantilever beam.

In the plug cable management apparatus, the rotating end of the cantilever beam is rotatably connected to the bracket, so that the cantilever beam can rotate around the first axis relative to the bracket, and the swing end of the cantilever beam can extend to the outside of the bracket to implement horizontal spreading and extension. The charging cable is mounted on the cantilever beam with the mounting member, so that a usage range of a charging plug can be expanded, and a pulling force that a user needs to exert during charging is reduced. The spring balancer outputs a traction force. When the cantilever structure is expanded, the pull rope is used to provide a reset force for the cantilever structure. After charging is completed, the cantilever beam can automatically recover, so that better charging experience can be brought to the user.

In some possible implementations, the mounting member includes an auxiliary cantilever, one end of the auxiliary cantilever is rotatably connected to the swing end of the cantilever beam around a second axis, the other end of the auxiliary cantilever is configured to mount the charging cable, and the second axis is parallel to the first axis. The auxiliary cantilever can further increase the use range of the charging plug. As a structural assistance, a length of the auxiliary cantilever is less than a length of the cantilever beam.

In some possible implementations, one end that is of the pull rope and that is away from the spring balancer is connected to the cantilever beam, and a distance between the second axis and a position that is of the cantilever beam and that is connected to the pull rope is less than a distance between the first axis and the position that is of the cantilever beam and that is connected to the pull rope. The position that is of the cantilever beam and that is connected to the pull rope may be closer to the second axis, so that a pulling force output by the spring balancer by pulling the cantilever beam through the pull rope can be reduced.

In some possible implementations, the bracket has a groove structure configured to accommodate the cantilever beam, the groove structure has an opening extending in the horizontal direction, and the opening is used for the cantilever beam to rotate into the groove structure or out of the groove structure around the first axis; and a depth of the groove structure in the horizontal direction is greater than or equal to a width of the cantilever beam, and a height of the groove structure in the vertical direction is greater than or equal to a height of the cantilever beam. The groove structure can provide space for accommodating the cantilever beam, facilitating accommodation and arrangement of the cantilever beam.

In some possible implementations, the groove structure includes a bottom wall and one side wall, the bottom wall is parallel to the vertical direction, and the side wall is perpendicular to the bottom wall and is connected to a bottom side of the bottom wall in the vertical direction. In this case, the groove structure is step-shaped. Alternatively, the groove structure includes a bottom wall and two opposite side walls in the vertical direction, the bottom wall is parallel to the vertical direction, and the two side walls are perpendicular to the bottom wall and are respectively connected to two sides of the bottom wall in the vertical direction. In this case, the groove structure is U-shaped.

In some possible implementations, the traction force output end of the spring balancer exposes the bottom wall of the groove structure, so that the spring balancer is conveniently connected to the pull rope.

In some possible implementations, the bracket includes an accommodating box, the accommodating box has a cable outlet, the spring balancer is accommodated in the accommodating box, and the traction force output end of the spring balancer exposes the cable outlet. The accommodating box can provide structural protection for the spring balancer.

According to a second aspect, this application provides a plug cable management apparatus, where the plug cable management apparatus includes a bracket, a pulley structure, a cantilever beam, a pull rope, and a spring balancer; the bracket is configured to be fastened on a charging pile; the spring balancer is fastened on the bracket, and the spring balancer is configured to output a traction force; the cantilever beam has a rotating end and a swing end, the rotating end of the cantilever beam is rotatably connected to the bracket around a first axis, and the first axis is perpendicular to a horizontal direction; the pulley structure is installed on the swing end of the cantilever beam; and one end of the pull rope is connected to a traction force output end of the spring balancer, the other end of the pull rope is disposed around the pulley structure, and the pull rope or the pulley structure is configured to mount a charging cable of the charging pile. The charging cable is mounted on the cantilever beam of the plug cable management apparatus with the mounting member, so that a usage range of a charging plug can be expanded, and the spring balancer outputs a traction force to provide a reset force for the cantilever beam. The pull rope and the pulley structure may be cooperatively configured to mount the charging cable. A height of the charging cable may be adjusted by using the pull rope, so that an application range of the charging plug can be further increased while labor is saved, thereby bringing better charging experience to a user.

In some possible implementations, the pulley structure includes a fixed pulley, the fixed pulley is rotatably installed on the swing end of the cantilever beam around a third axis, and the third axis is perpendicular to the first axis; and one end that is of the pull rope and that is away from the spring balancer winds around the fixed pulley and is configured to mount the charging cable. The pull rope winds around the fixed pulley to mount the charging cable. The height of the charging cable can be changed by extending and shortening the pull rope in a vertical direction, and the fixed pulley can save labor.

In some possible implementations, the pulley structure includes a pulley block, the pulley block includes at least one fixed pulley and at least one movable pulley, each fixed pulley is rotatably installed on the swing end of the cantilever beam around a third axis, and the third axis is perpendicular to the first axis; and the at least one movable pulley is hoisted from the at least one fixed pulley by using the pull rope, a rotation axis of each movable pulley is parallel to the third axis, and the at least one movable pulley is configured to mount the charging cable. A design of a structure of the pulley block can further save labor.

In some possible implementations, the plug cable management apparatus further includes a guide pulley, the guide pulley is rotatably installed on the cantilever beam around a fourth axis, the fourth axis is parallel to the first axis, and the pull rope is disposed around the pulley structure after winding around the guide pulley. The guide pulley can change an extension direction of the pull rope, so that the pull rope is conveniently wound around the pulley structure.

In some possible implementations, the cantilever beam includes an accommodating inner cavity and a mounting opening in communication with the accommodating inner cavity, the accommodating inner cavity is configured to accommodate the pulley structure and the pull rope, and the mounting opening is used for a part of the pull rope or a part of the pulley structure to extend out. The cantilever beam is of a hollow or frame structure, which can reduce a structural weight while maintaining sufficient strength and provide protection for the pulley structure and the pull rope.

In some possible implementations, the cantilever beam includes a top plate, a bottom plate, and a connecting plate, the top plate and the bottom plate are opposite in a vertical direction, the connecting plate is connected between the top plate and the bottom plate, the top plate, the bottom plate, and the connecting plate are enclosed to form the accommodating inner cavity, and the mounting opening runs through the bottom plate in the vertical direction.

In some possible implementations, the bracket has a groove structure configured to accommodate the cantilever beam, the groove structure has an opening extending in the horizontal direction, and the opening is used for the cantilever beam to rotate into the groove structure or out of the groove structure around the first axis; and a depth of the groove structure in the horizontal direction is greater than or equal to a width of the cantilever beam, and a height of the groove structure in the vertical direction is greater than or equal to a height of the cantilever beam. The groove structure can provide space for accommodating the cantilever beam, facilitating accommodation and arrangement of the cantilever beam.

In some possible implementations, the groove structure includes a bottom wall and one side wall, the bottom wall is parallel to the vertical direction, and the side wall is perpendicular to the bottom wall and is connected to a bottom side of the bottom wall in the vertical direction. In this case, the groove structure is step-shaped. Alternatively, the groove structure includes a bottom wall and two opposite side walls in the vertical direction, the bottom wall is parallel to the vertical direction, and the two side walls are perpendicular to the bottom wall and are respectively connected to two sides of the bottom wall in the vertical direction. In this case, the groove structure is U-shaped.

In some possible implementations, the traction force output end of the spring balancer exposes the bottom wall of the groove structure, so that the spring balancer is conveniently connected to the pull rope.

In some possible implementations, the bracket includes an accommodating box, the accommodating box has a cable outlet, the spring balancer is accommodated in the accommodating box, and the traction force output end of the spring balancer exposes the cable outlet. The accommodating box can provide structural protection for the spring balancer.

According to a third aspect, this application provides a charging pile, where the charging pile includes a main frame body, a charging plug, and a charging cable, one end of the charging cable is connected to the charging plug, the other end of the charging cable is connected to the main frame body, and a slot used to place the charging plug is disposed on a surface of the main frame body. When the charging plug is in an idle state, the charging plug may be inserted into the slot.

The charging pile includes any plug cable management apparatus provided in the first aspect, the bracket of the plug cable management apparatus is fastened on a top of the main frame body, the first axis is parallel to a height direction of the main frame body, and the mounting member is configured to mount the charging cable. The charging pile can achieve a technical effect of the plug cable management apparatus provided in the first aspect.

Alternatively, the charging pile includes any plug cable management apparatus provided in the second aspect, the bracket of the plug cable management apparatus is fastened to a top of the main frame body, the first axis is parallel to a height direction of the main frame body, and the pulley structure or the pull rope is configured to mount the charging cable. The charging pile can achieve a technical effect of the plug cable management apparatus provided in the first aspect.

## BRIEF DESCRIPTION OF DRAWINGS

FIG. 1a is a diagram of an application scenario of a charging pile according to an embodiment of this application;
FIG. 1b is a diagram of an application scenario of a charging pile according to an embodiment of this application;
FIG. 2 is a diagram of a structure of a charging pile according to an embodiment of this application;
FIG. 3a is diagram of a structure of a plug cable management apparatus according to an embodiment of this application;
FIG. 3b is a diagram of a structure of a plug cable management apparatus according to an embodiment of this application;
FIG. 4 is a cross-sectional diagram of a partial structure of a plug cable management apparatus according to an embodiment of this application;
FIG. 5a is a diagram of a structure of a plug cable management apparatus with a cantilever beam in an accommodated state according to an embodiment of this application;
FIG. 5b is a diagram of a structure of a plug cable management apparatus with a cantilever beam in an expanded state in a charging process according to an embodiment of this application;
FIG. 5c is a diagram of a structure of a plug cable management apparatus with a cantilever beam in an expanded state when charging ends according to an embodiment of this application;
FIG. 6a is a cross-sectional diagram of a partial structure of a plug cable management apparatus according to an embodiment of this application;
FIG. 6b is a cross-sectional diagram of a partial structure of a plug cable management apparatus according to an embodiment of this application;
FIG. 6c is a cross-sectional diagram of a partial structure of a plug cable management apparatus according to an embodiment of this application;
FIG. 7 is a diagram of a partial structure of a pulley structure and a pull rope of a plug cable management apparatus according to an embodiment of this application;
FIG. 8 is a diagram of a structure of a plug cable management apparatus according to an embodiment of this application;
FIG. 9a is a diagram of a structure of a plug cable management apparatus mounting a charging cable according to an embodiment of this application;
FIG. 9b is a diagram of a structure of a plug cable management apparatus mounting a charging cable according to an embodiment of this application; and
FIG. 10 is a cross-sectional diagram of a partial structure of a plug cable management apparatus mounting a charging cable according to an embodiment of this application.

Reference numerals:

10-charging pile; 101-charging host; 102-charging terminal; 103-charging cable; 104-charging end; 20-power grid; 30-electric vehicle; 1-plug cable management apparatus; 11-bracket; 111-frame; 112-accommodating box; 12-cantilever structure; 121-cantilever beam; 1211-rotating end; 1212-swing end; 1213-connecting shaft; 1214-protruding portion; 122-auxiliary cantilever; 123-pulley structure; 1231, 1231a, 1231b-fixed pulley; 1232-movable pulley; 1233-first housing; 1234-second housing; 1235-first rotating shaft; 1236-second rotating shaft; 124-guide pulley; 125-spring; 13-pull rope; 131-pull ring; 14-spring balancer; 2-main frame body; and 21-slot.

**DESCRIPTION OF EMBODIMENTS**

There are increasingly more electric vehicle models in the new energy industry. To adapt to more diversified electric vehicle models, a design of a charging pile is developing toward a direction of a longer charging cable. In addition, the market has an increasingly high requirement on a charging speed of the charging pile. To provide a high power and a large current to meet a charging efficiency requirement, a charging cable equipped in the charging pile is also thicker and heavier. As a result, most charging piles have long charging cables and are prone to long-term dragging on the ground, which poses a safety risk. A user needs to resist greater cable gravity during charging, thereby affecting charging experience.

Based on this, embodiments of this application provide a plug cable management apparatus and a charging pile. In the plug cable management apparatus, through a combination of a cantilever and a spring balancer, while a long-distance charging requirement is met, labor in a charging operation is reduced, thereby improving charging experience.

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

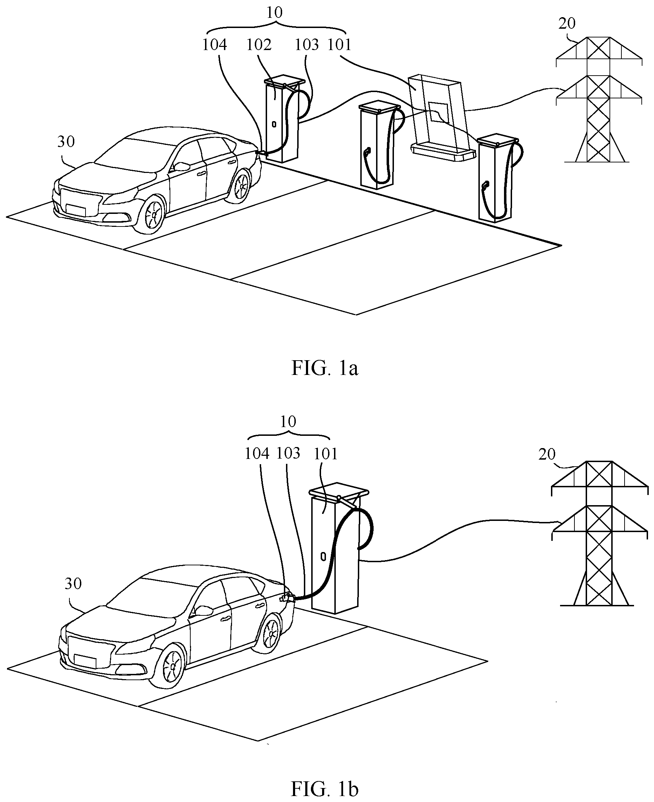

FIG. 1a and FIG. 1b are diagrams of an application scenario of a charging pile 10 according to an embodiment of this application. As shown in FIG. 1a and FIG. 1b, the charging pile 10 is configured to receive an alternating current output by a power grid 20, convert the alternating current into a stable direct current, and transmit the stable direct current to an electric vehicle 30, to charge the electric vehicle 30. Alternatively, the electric vehicle 30 may reversely output electric energy to the power grid 20 through the charging pile 10. The electric vehicle 30 is a means of transportation driven by electric energy to drive. The electric vehicle 30 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some embodiments, as shown in FIG. 1a, the charging pile 10 is a split-type charging device. Specifically, the charging pile 10 includes a charging host 101, at least one charging terminal 102, and at least one charging plug 104. The charging host 101 is connected to each charging terminal 102, the at least one charging terminal 102 is connected to at least one charging plug 104, each charging plug 104 is connected to a corresponding charging terminal 102 through one charging cable 103, and each charging plug 104 is configured to connect to the electric vehicle 30. During specific implementation, one charging terminal 102 is connected to one or more charging plugs 104, and the one or more charging plugs 104 are connected to one electric vehicle 30.

The charging host 101 includes a plurality of power conversion apparatuses. The plurality of power conversion apparatuses are configured to convert an alternating current output by the power grid 20 into a stable direct current, and then transmit the stable direct current to the charging terminal 102. The plurality of power conversion apparatuses include, for example, an alternating current-direct current (alternating current-direct current, AC-DC) conversion apparatus and a DC-DC conversion apparatus. The charging terminal 102 transmits the stable direct current to the electric vehicle 30 through a connected charging plug 104. The charging terminal 102 includes a housing, a human-machine interaction interface, a charging control unit, a metering and billing unit, and the like, and is configured to perform information exchange, energy transmission, metering and billing, and the like with the electric vehicle 30.

In some other embodiments, as shown in FIG. 1b, the charging pile 10 is an integrated charging device. Specifically, the human-machine interaction interface, the charging control unit, the metering and billing unit, and the like in the charging pile 10 are directly provided in the charging host 101, so that the charging pile 10 includes only the charging host 101 and at least one charging plug 104 connected to the charging host 101 through the charging cable 103, and does not include the charging terminal 102. During specific implementation, the plurality of power conversion apparatuses in the charging host 101 convert an alternating current output by the power grid 20 into a stable direct current, and directly transmits the stable direct current to the electric vehicle 30 through the charging plug 104.

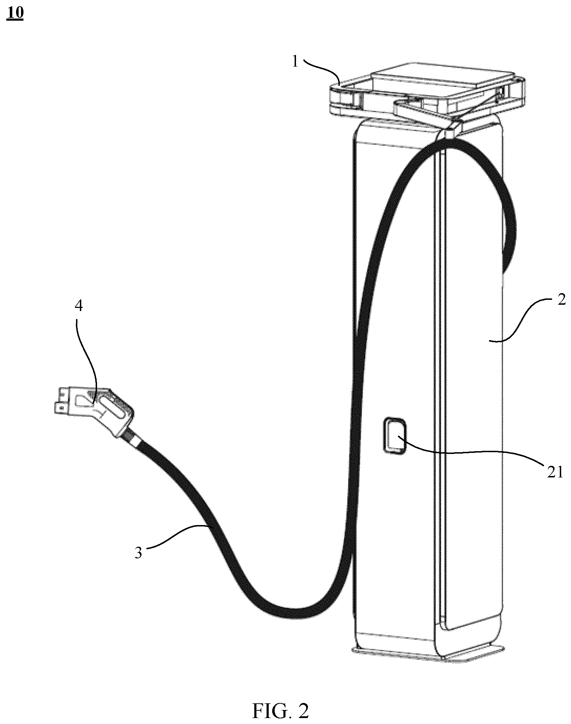

The charging pile 10 provided in this embodiment of this application may arrange the charging cable 103, to ensure that charging requirements of different vehicle models are met, thereby bringing better charging experience to a user. FIG. 2 shows an example of a structure of a charging pile 10 according to an embodiment of this application. As shown in FIG. 2, the charging pile 10 includes a plug cable management apparatus 1, a main frame body 2, a charging cable 3, and a charging plug 4. When the charging pile 10 is a split-type charging device, the main frame body 2 is equivalent to the charging terminal 102 in FIG. 1a. When the charging pile 10 is an integrated charging device, the main frame body 2 is equivalent to the charging host 101 in FIG. 1b. For example, the main frame body 2 is of a cuboid type, and a length direction thereof is a vertical direction. An energy storage apparatus is disposed in the main frame body 2, and the energy storage apparatus is configured to convert an alternating current of a power grid into a direct current for output, or convert a direct current output by an electric vehicle 30 into an alternating current for output to the power grid. One end of the charging cable 3 is connected to a direct-current output end of the energy storage apparatus, and the other end thereof is connected to the charging plug 4. A slot 21 for placing the charging plug 4 is disposed on a surface of the main frame body 2. When the charging plug 4 is in an idle state, the charging plug 4 may be inserted into the slot 21, to prevent a safety risk caused by unfixed placement of the charging plug 4. When the charging plug 4 is in use, the charging plug 4 needs to be moved to a position of the electric vehicle 30 to charge the electric vehicle 30. It can be learned that, when the charging plug 4 is in an in-use state, the charging cable 3 is expanded relative to the main frame body 2, and when the charging plug 4 is in an unused state, the charging cable 3 is folded relative to the main frame body 2. For example, the plug cable management apparatus 1 is disposed at a top of the main frame body 2. The plug cable management apparatus 1 may be configured to provide support and management for the charging cable 3, to prevent the charging cable 3 from being dragged on the ground, and further reduce gravity burden on a user when holding the charging plug 4, thereby achieving an effect of helping and saving labor.

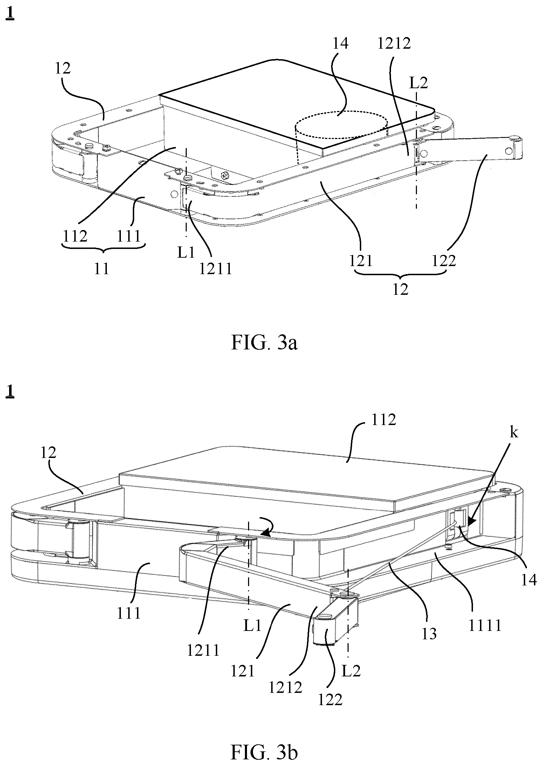

FIG. 3a and FIG. 3b are diagrams of a structure of a plug cable management apparatus 1 according to an embodiment of this application. As shown in FIG. 3a and FIG. 3b, the plug cable management apparatus 1 includes a bracket 11, a cantilever structure 12, a pull rope 13, and a spring balancer 14. The cantilever structure 12, the pull rope 13, and the spring balancer 14 may form one component, configured to mount one charging cable 3. The bracket 11 may provide support for another structure, and the bracket 11 may be specifically fastened to a top of a main frame body 2 of a charging pile 10. The bracket 11 may be fastened relative to the main frame body 2 in a manner of welding, threaded connection, or the like, or may rotate parallel to a horizontal direction relative to the main frame body 2 in a manner of pivotal connection or the like. A shape of the bracket 11 may adapt to a top shape of the main frame body 2. For example, the top of the main frame body 2 is rectangular, and the shape of the bracket 11 may be rectangular. To facilitate mounting of the charging cable 3 by the plug cable management apparatus 1, an edge of the bracket 11 may fan out from a top edge of the main frame body 2.

Still refer to FIG. 3a and FIG. 3b. A status of the main frame body 2 of the charging pile 10 when the main frame body 2 is arranged is used as a reference. The bracket 11 includes a rectangular frame 111, and the frame 111 is horizontally disposed. In some embodiments, the bracket 11 further includes an accommodating box 112, the accommodating box 112 has a cavity, and the cavity 112 may be configured to accommodate the spring balancer 14. For example, the frame 111 is disposed around the accommodating box 112, and at least one circumferential surface of the accommodating box 112 is attached and fastened to an inner side wall of the frame 111. In FIG. 3a, the spring balancer 14 accommodated in the accommodating box 112 is shown by a dashed line. The spring balancer 14 may also be referred to as an elastic balancer, and the spring balancer 14 may also be replaced with a hydraulic balancer.

The cantilever structure 12 includes a cantilever beam 121 and a mounting member configured to mount the charging cable 3. The cantilever beam 121 has a rotating end 1211 and a swing end 1212. The rotating end 1211 of the cantilever beam 121 may be rotatably connected to the frame 111 of the bracket 11 around a first axis L 1, the first axis L1 is parallel to a vertical direction, the cantilever beam 121 may rotate around the first axis L1 in a horizontal plane relative to the bracket 11, and the swing end 1212 is suspended. The rotating end 1211 of the cantilever beam 121 may be pivotally connected to the frame 111 via a shaft hole, or may be rotatably connected thereto via a rotating shaft. For example, the mounting member is an auxiliary cantilever 122, the auxiliary cantilever 122 is installed on the swing end 1212 of the cantilever beam 121, and the auxiliary cantilever 122 is configured to mount the charging cable 3 of the charging pile 10. For example, the auxiliary cantilever 122 may be rotatably installed on the swing end 1212 of the cantilever beam 121 around a second axis L2. The auxiliary cantilever 122 may be pivotally connected to the swing end 1212 directly via a shaft hole, or may be rotatably connected thereto via a rotating shaft. In an embodiment, the auxiliary cantilever 122 is of a long strip shape, one end thereof is rotatably connected to the swing end 1212, and the other end thereof is suspended and configured to mount the charging cable 3. The second axis L2 is parallel to the first axis L1. As a structural assistance, a length of the auxiliary cantilever 122 is less than a length of the cantilever beam 121, and the auxiliary cantilever 122 may extend a length of the cantilever beam 121 in the horizontal direction, to increase a length of the charging cable 3 extended by the cantilever structure 12 in the horizontal direction. When the charging cable 3 is mounted on the auxiliary cantilever 122, a force applied by a weight of the charging cable 3 to the auxiliary cantilever 122 is borne by the auxiliary cantilever 122, the cantilever beam 121, and the bracket 11 in the vertical direction.

The rotating end 1211 of the cantilever beam 121 rotates around the first axis L1 relative to the bracket 11, and the swing end 1212 may be relatively far away from or close to the frame 111, so as to drive the auxiliary cantilever 122 to be relatively far away from or close to the frame 111, thereby changing a distance of the charging cable 3 mounted on the auxiliary cantilever 122 relative to the main frame body 2, so that a user can conveniently hold a charging plug 4 to pull the charging cable 3 to a proper position to charge an electric vehicle 30. For example, one end of the pull rope 13 is connected to the swing end 1212 of the cantilever beam 121, and the other end thereof is connected to a traction force output end of the spring balancer 14. The pull rope 13 and the spring balancer 14 are configured to provide power for the cantilever beam 121 to return. When the charging plug 4 completes charging and needs to be inserted back into the main frame body 2, the spring balancer 14 outputs a pulling force to pull the charging cable 3 back through the pull rope 13 to implement reset. In an embodiment, a direction of the pulling force output by the spring balancer 14 is perpendicular to the vertical direction, and the spring balancer 14 and the cantilever beam 121 are distributed at a same horizontal height, so that a pulling force output by the spring balancer 14 can be transmitted to the cantilever beam 121 through the pull rope 13 and transmission of the force is roughly in a same horizontal plane. The weight of the charging cable 3 is borne by the auxiliary cantilever 122, the cantilever beam 121, and the bracket 11. A force applied by the spring balancer 14 to the cantilever beam 121 through the pull rope 13 is perpendicular to a gravity direction of the charging cable 3. Therefore, the spring balancer 14 only needs to bear a force of pulling the cantilever beam 121. When the user holds the charging plug 4 and pulls the charging cable 3 to charge the electric vehicle 30, the user only needs to overcome the pulling force from the spring balancer 14 on the cantilever beam 121. A reset force output by the spring balancer 14 is equivalent to an internal stress of the charging cable 3 when the cantilever beam 121 is in an accommodated state, so that the user can save labor, thereby bringing better charging experience.

In some embodiments, the frame 111 forms a groove structure C configured to accommodate the cantilever beam 121, and an opening of the groove structure C is oriented to being perpendicular to the vertical direction, so that the swing end 1212 of the cantilever beam 121 can conveniently rotate to enter and move out of the groove structure C. The accommodating box 112 configured to accommodate the spring balancer 14 has a cable outlet k in communication with the groove structure C, the traction force output end of the spring balancer 14 is exposed from the cable outlet k, and the pull rope 13 may be connected to the traction force output end of the spring balancer 14 through the cable outlet k.

Refer to FIG. 3a and FIG. 3b together. The cantilever beam 121 has an accommodated state of being accommodated in the frame 111 and an expanded state of being expanded by rotating to extend out relative to the frame 111. When the cantilever beam 121 is accommodated in the groove structure C of the frame 111, as shown in FIG. 3a, a structure of the cantilever beam 121 is basically accommodated in the groove structure C and does not protrude from an outer surface of the frame 111. The rotating end 1211 of the cantilever beam 121 is accommodated in the groove structure C, and the swing end 1212 of the cantilever beam 121 is also accommodated in the groove structure C. The auxiliary cantilever 122 is exposed outside the groove structure C and protrudes from a circumferential outer surface of the bracket 11, so that the auxiliary cantilever 122 can conveniently mount the charging cable 3. When the cantilever beam 121 rotates out of the groove structure C of the frame 111, as shown in FIG. 3b, the swing end 1212 of the cantilever beam 121 is located on an outer side of the bracket 11 in the horizontal direction, the auxiliary cantilever 122 is connected to the swing end 1212, and a specific distance exists between the auxiliary cantilever 122 and the frame 111. When the plug cable apparatus 1 is applied, the charging cable 3 may be mounted at a position of the auxiliary cantilever 122. Therefore, when the cantilever beam 121 is in the accommodated state, the charging cable 3 is equivalent to being mounted at a position close to the frame 111. In this case, the charging cable 3 may be folded, and the charging plug 4 may be inserted into the main frame body 2 and becomes idle. When the cantilever beam 121 is in the expanded state, the charging cable 3 is equivalent to being mounted at a position away from the frame 111. In this case, the charging cable 3 may be stretched, and the charging plug 4 may be far away from the main frame body 2 and is used to charge the electric vehicle. When the user holds the charging plug 4 and pulls the charging cable 3 to charge the electric vehicle, the charging cable 3 expands the cantilever beam 121 by using the auxiliary cantilever 122. The swing end 1212 of the cantilever beam 121 becomes away from the frame 111 with the first axis L1 as a circle center. The swing end 1212 pulls the traction force output end of the spring balancer 14 through the pull rope 13. The spring balancer 14 accumulates elastic potential energy, and generates a traction force for pulling back the pull rope 13. When charging by the user is completed, the spring balancer 14 releases the elastic potential energy, and pulls the cantilever beam 121 through the pull rope 13 to rotate reversely around the first axis L1, until the cantilever beam 121 rotates to enter the groove structure C for accommodation.

In some embodiments, the plug cable management apparatus 1 may include a plurality of cantilever structures 12, so that one main frame body 2 can mount a plurality of charging cables 3 by using the plurality of cantilever structures 12 in a one-to-one correspondence, and each charging cable 3 may be correspondingly mounted on one cantilever structure 12 and connected to one charging plug 4. FIG. 3a and FIG. 3b show two symmetrically distributed cantilever structures 12. In this embodiment of this application, only one of the cantilever structures 12 is used as an example for description.

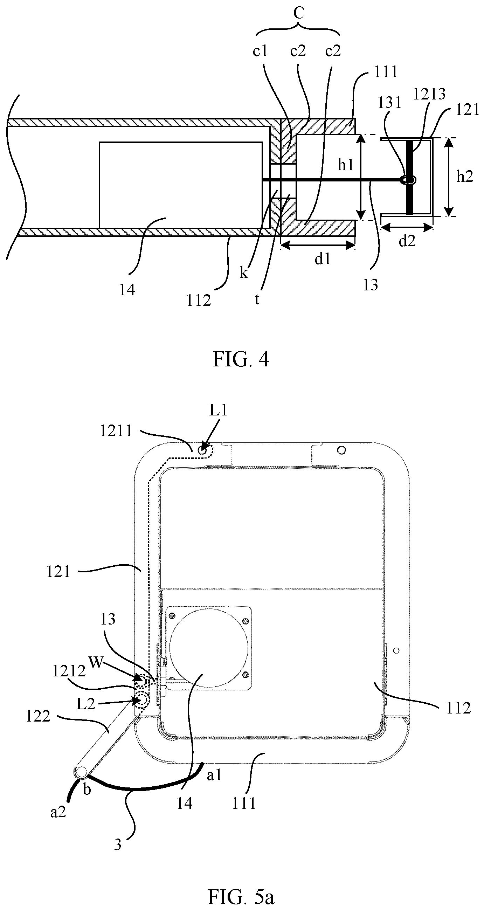

FIG. 4 is a brief cross-sectional diagram of a partial structure of a plug cable management apparatus 1. As shown in FIG. 4, a cantilever beam 121 is of a hollow structure, and a fastened portion configured to connect to a pull rope 13 is disposed on a swing end 1212 of the cantilever beam 121. For example, the fastened portion is a connecting shaft 1213 fastened to the cantilever beam 121 on two ends, and a length direction of the connecting shaft 1213 is parallel to a vertical direction. One end of the pull rope 13 is connected to a traction force output end of a spring balancer 14, the other end thereof is bound to a pull ring 131, and the pull ring 131 is sleeved on the connecting shaft 1213. A groove structure C of a frame 111 specifically includes a bottom wall c1 and two side walls c2. The two side walls c2 are oppositely connected to two side edges of the bottom wall c1 in the vertical direction. The bottom wall c1 and the two side walls c2 may be enclosed to form the groove structure C. An opening of the groove structure C faces the cantilever beam 121. An accommodating box 112 is fastened on the frame 111, the accommodating box 112 has a cable outlet k, and the traction force output end of the spring balancer 14 may be exposed from the cable outlet k. Correspondingly, the frame 111 has a through hole t that runs through the bottom wall c1, the through hole t is opposite to and may be in communication with a position of the cable outlet k, and the pull rope 13 may pass through the through hole t and the cable outlet k to be connected to the traction force output end of the spring balancer 14. In a horizontal direction, a width d1 of the side wall c2 protruding from the bottom wall c1 is greater than or equal to a width d2 of the cantilever beam 121. In the vertical direction, a distance h1 between the two side walls c2 is greater than or equal to a height h2 of the cantilever beam 121, so that the cantilever beam 121 can be accommodated in the groove structure C. The width d1 of the side wall c2 protruding from the bottom wall c1 may be considered as a depth of the groove structure C, and the distance h1 between the two side walls c2 may be considered as a height of the groove structure C in the vertical direction.

FIG. 5a to FIG. 5c are diagrams of a working principle of a plug cable management apparatus 1 that is top-viewed in a vertical direction. The following describes in detail a working process of the plug cable management apparatus 1 with reference to FIG. 5a to FIG. 5c.

As shown in FIG. 5a, a cantilever beam 121 is in an accommodated state, a structure of the cantilever beam 121 is basically accommodated in a groove structure C and does not protrude from an outer surface of a frame 111, and an auxiliary cantilever 122 is exposed outside the groove structure C and protrudes from a circumferential outer surface of a bracket 11, so that the auxiliary cantilever 122 can conveniently mount a charging cable 3. One end of a pull rope 13 is connected to a spring balancer 14, and the other end thereof is connected to a swing end 1212 of the cantilever beam 121. The spring balancer 14 provides a specific traction force for the pull rope 13, so that the pull rope 13 pulls the cantilever beam 121 to be accommodated in the groove structure C without being detached. A distance between a second axis L2 and a position W that is of the cantilever beam 121 and that is connected to the pull rope 13 is less than a distance between a first axis L1 and the position W that is of the cantilever beam 121 and that is connected to the pull rope 13, so that the position W that is of the cantilever beam 121 and that is connected to the pull rope 13 is as close as possible to the second axis L2, and a pulling force that needs to be output by the spring balancer 14 by pulling the cantilever beam 121 through the pull rope 13 is reduced. The position W that is of the cantilever beam 121 and that is connected to the pull rope may be considered as a position of the connecting shaft 1213 in FIG. 4. One end a1 of the charging cable 3 is configured to connect to a main frame body 2 of a charging pile 10, the other end a2 of the charging cable 3 is configured to connect to a charging plug 4, and a mounting point b located between the two ends is connected to one end that is of the auxiliary cantilever 122 and that is away from the cantilever beam. Because FIG. 5a is at a top view angle, the charging cable 3 is bent to some extent in the vertical direction, and an actual length thereof is greater than a length shown in FIG. 5a. The mounting point b of the charging cable 3 is relatively fastened to the auxiliary cantilever 122. For ease of showing the spring balancer 14, a top structure of an accommodating box 112 is hidden herein.

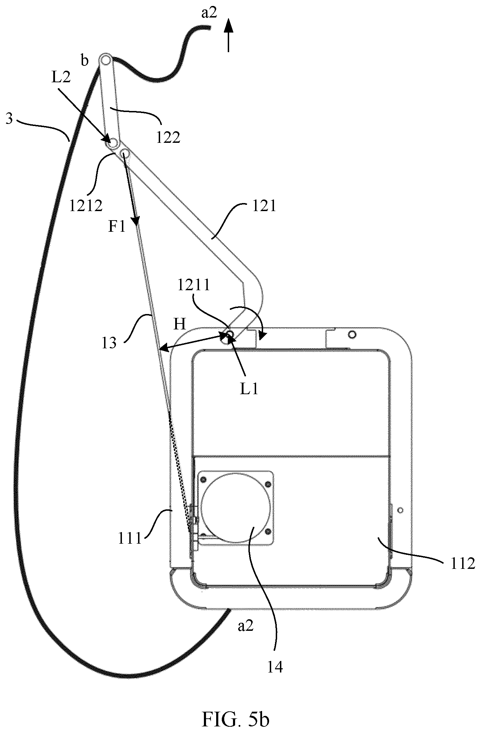

As shown in FIG. 5b, when a user needs to charge an electric vehicle 30, the user holds the charging plug 4 and pulls the charging cable 3. The user applies a traction force shown by an arrow in FIG. 5b to the charging cable 3, so that the charging plug 4 becomes far away from the bracket 11 and has a larger moving range. The endpoint a2 of the charging cable 3 is pulled, and the auxiliary cantilever 122 is driven to move by using the mounting point b. The auxiliary cantilever 122 then drives the cantilever beam 121 to rotate around the first axis L1 and rotate to move out of the groove structure C of the frame 111. A force applied by the spring balancer 14 to the swing end 1212 of the cantilever beam 121 through the pull rope 13 is a reset force F1, a distance H between the pull rope 13 and the first axis L1 is a length of a resisting arm of the cantilever beam 121, and the distance H is perpendicular to the pull rope 13. In a process in which the cantilever beam 121 rotates around the first axis L1 to expand, a direction of the reset force F1 always points to a connection position between the pull rope 13 and the spring balancer 14 along the pull rope 13, and the distance H between the pull rope 13 and the first axis L1 gradually decreases, that is, the length of the resisting arm gradually decreases. Correspondingly, if an arm of force of the user pulling the cantilever beam 121 through the charging cable 3 remains unchanged, a driving force of the user pulling the cantilever beam 121 through the charging cable 3 gradually decreases. In other words, the pulling force of the spring balancer 14 that the user needs to overcome is reduced. Therefore, in a process in which the user pulls the charging cable 3, as a distance between the endpoint a2 of the charging cable 3 and the frame 111 gradually increases, a force that the user needs to exert on the charging cable 3 becomes smaller. In other words, the plug cable management apparatus 1 provided in this embodiment of this application can implement an effect that a longer charging distance leads to a smaller operating force, and assist the user in long-distance charging, thereby reducing operation difficulty in long-distance charging. In some embodiments, a maximum angle at which the cantilever beam 121 rotates around the first axis L1 relative to the frame 111 is set to 135±5°.

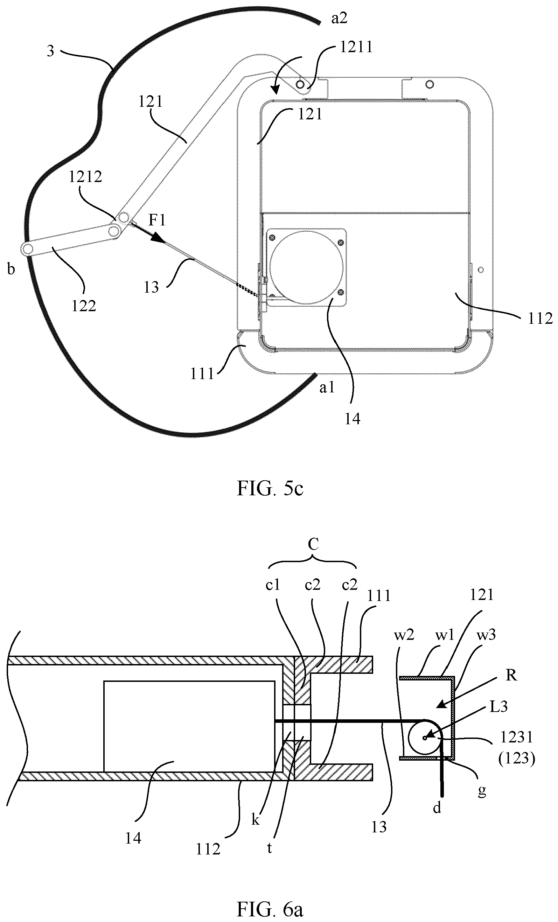

As shown in FIG. 5c, when the user completes charging and puts the charging plug 4 back, the force applied by the user 4 to the charging cable 3 disappears, and the traction force output by the spring balancer 14 acts on the cantilever beam 121 through the pull rope 13, so that the cantilever beam 121 rotates reversely around the first axis L1 until the cantilever beam 121 is accommodated in the groove structure C of the frame 111, thereby implementing automatic reset of the cantilever beam 121. In some embodiments, to buffer impact of the cantilever beam 121 on the frame 111 when rotating to enter the groove structure C, a buffer structure such as a buffer rubber pad and buffer foam may be disposed in the groove structure C. When the cantilever beam 121 rotates into the groove structure C, the cantilever beam 121 collides with the buffer structures first, and the buffer structures absorb an impact force through deformation of the structures, to achieve a buffering effect. Certainly, the buffer structure may alternatively be disposed on a surface of the cantilever beam 121, or the buffer structure is disposed both in the groove structure C and on the surface of the cantilever beam 121. Alternatively, a damper may be disposed between the cantilever beam 121 and the frame 111, and when the cantilever beam 121 is pulled by the spring balancer 14 to reset, the damper provides a damping force to perform a buffering function.

As shown in FIG. 6a to FIG. 6c, a plug cable management apparatus 1 provided in an embodiment of this application includes a bracket 11, a cantilever structure 12, a pull rope 13, and a spring balancer 14. A difference from the embodiment shown in FIG. 3a and FIG. 3b lies in that the cantilever structure 12 herein includes a cantilever beam 121 and a pulley structure 123, one end that is of the pull rope 13 and that is away from the spring balancer 14 is disposed around the pulley structure 123, and the pull rope 13 may cooperate with the pulley structure 123 to mount a charging cable 3. Based on different implementations of the pulley structure 123, the pull rope 13 may be configured to mount the charging cable 3, and the pulley structure 123 may also be configured to mount the charging cable 3. The spring balancer 14 mounts the charging cable 3 by using the pull rope 13 and the pulley structure 123, and a force applied by the spring balancer 14 to the pull rope 13 for reset is greater than or equal to a hanging weight of the charging cable 3. The cantilever beam 121 is of a hollow structure, so that the cantilever beam 121 has an accommodating inner cavity R, and the accommodating inner cavity R may be configured to accommodate the pulley structure 123 and the pull rope 13. To enable the pull rope 13 to conveniently extend out of the cantilever beam 121, the cantilever beam 121 further includes a mounting opening g in communication with the accommodating inner cavity R.

As shown in FIG. 6a, a specific example of the pulley structure 123 is a fixed pulley 1231. The fixed pulley 1231 may be rotatably installed on the cantilever beam 121 around a third axis L3. A specific installation position is a swing end 1212 of the cantilever beam 121. The third axis L3 is perpendicular to a vertical direction, and is also perpendicular to a first axis L1. One end d that is of the pull rope 13 and that is away from the spring balancer 14 winds around the fixed pulley 1231 and extends downward, and the charging cable 3 may be mounted at an endpoint d of the pull rope 13. When the fixed pulley 1231 rotates around the third axis L3, the pull rope 13 may slide relative to a circumferential surface of the fixed pulley 1231, so that the endpoint d of the pull rope 13 can move upward or downward in the vertical direction. When a user pulls the charging cable 3, the endpoint d of the pull rope 13 moves up and down, so that a height of the charging cable 3 in the vertical direction can be changed, and it is further convenient for the user to move a charging plug 4 to charge an electric vehicle 30. A position of the third axis L3 relative to the cantilever beam 121 is fixed. The pull rope 13 herein functions to pull the cantilever beam 121, and also functions to mount the charging cable 3 and adjust the height of the charging cable 3. In addition, the charging cable 3 is not directly connected to the cantilever beam 121, and a non-rigid connection between the two is implemented through cooperation of the pulley structure 123 and the pull rope 13, so that damage to the cantilever beam 121 or another mounting structure caused by sudden overload of the charging cable 3 can be avoided.

In some embodiments, still refer to FIG. 6a. The cantilever beam 121 includes a top plate w1, a bottom plate w2, and a connecting plate w3. The top plate w1 and the bottom plate w2 are opposite in the vertical direction. The connecting plate w3 is connected between the top plate w1 and the bottom plate w2. The top plate w1, the bottom plate w2, and the connecting plate w3 present a "U" shape, the accommodating inner cavity R may be formed among the top plate w1, the bottom plate w2, and the connecting plate w3. In the vertical direction, the bottom plate w2 is located on a bottom side of the top plate w1, the mounting opening g runs through the bottom plate w2 in the vertical direction, and the mounting opening g may enable the accommodating inner cavity R to communicate with space on a side that is of the bottom plate w2 and that is away from the top plate w1. A radial size that is of the mounting opening g and that is perpendicular to the vertical direction needs to be greater than a radial size of the pull rope 13, so that the pull rope 13 can extend through the mounting opening g.

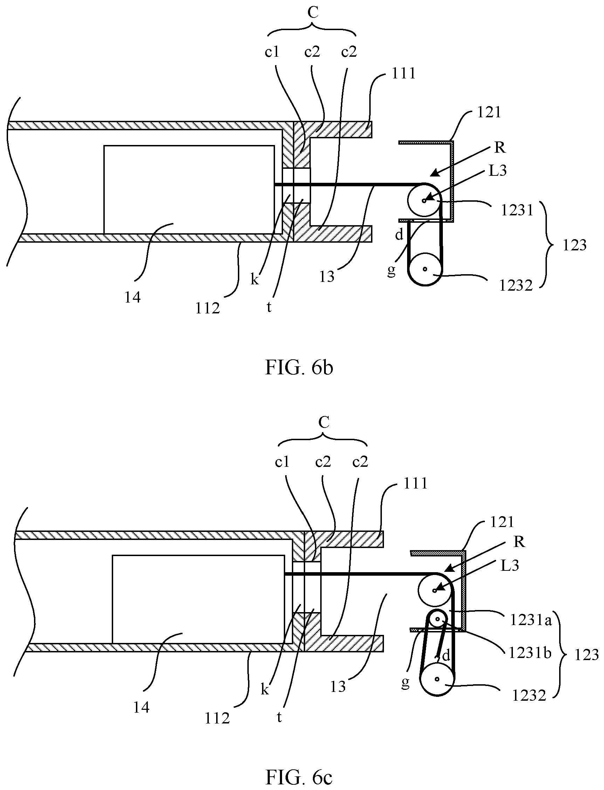

As shown in FIG. 6b, a specific example of the pulley structure 123 is a pulley block. The pulley block includes a fixed pulley 1231 and a movable pulley 1232. The fixed pulley 1231 may be rotatably installed on the swing end 1212 of the cantilever beam 121 around the third axis L3, and the third axis L3 is perpendicular to the first axis L1. After winding around the fixed pulley 1231 and the movable pulley 1232, the pull rope 13 may be fastened on the movable pulley 1232, or may be fastened on the cantilever beam 121. For example, the endpoint d of the pull rope 13 herein is fastened on the cantilever beam 121. The movable pulley 1232 is equivalent to being hoisted from the fixed pulley 1231 through the pull rope 13. The movable pulley 1232 herein is configured to mount the charging cable 3. A rotation axis of the movable pulley 1232 is parallel to the third axis L3. When the user pulls the charging cable 3, a length of the pull rope 13 between the endpoint d of the pull rope 13 and the fixed pulley 1231 may be increased or shortened, and the movable pulley 1232 may rotate around the rotation axis thereof and move up and down in the vertical direction, so that the height of the charging cable 3 in the vertical direction can be changed, and it is further convenient for the user to move the charging plug 4 to charge the electric vehicle 30. The position of the third axis L3 relative to the cantilever beam 121 is fixed. The pull rope 13 herein functions to pull the cantilever beam 121, and can also adjust the height of the charging cable 3 by changing a height of the movable pulley 1232.

Based on the pulley structure 123 in the pulley block form shown in FIG. 6b, the pulley block may further have another combination manner. As shown in FIG. 6c, the pulley block includes two fixed pulleys 1231 and one movable pulley 1232, and the two fixed pulleys 1231 are respectively a fixed pulley 1231a and a fixed pulley 1231b. The fixed pulley 1231a may be rotatably installed on the swing end 1212 of the cantilever beam 121 around the third axis L3, and the third axis L3 is perpendicular to the first axis L1. The movable pulley 1232 is hoisted from the fixed pulley 1231a through the pull rope 13, the movable pulley 1232 is configured to mount the charging cable 3, and a rotation axis of the movable pulley 1232 is parallel to the third axis L3. The fixed pulley 1231b is rotatably installed on the cantilever beam 121, and a rotation axis of the fixed pulley 1231b is parallel to the third axis L3. In other words, the two fixed pulleys 1231 are not coaxial. In the vertical direction, the fixed pulley 1231b is disposed between the fixed pulley 1231a and the movable pulley 1232, and one end that is of the pull rope 13 and that is away from the spring balancer 14 sequentially winds around the fixed pulley 1231a, the movable pulley 1232, and the fixed pulley 1231b to hoist the movable pulley 1232. The fixed pulley 1231b may further achieve a labor-saving effect. The two fixed pulleys 1231 may alternatively be coaxially disposed.

In specific implementation, when the pulley structure 123 includes a pulley block including a plurality of fixed pulleys 1231 and a plurality of movable pulleys 1232, the pull rope 13 needs to alternately wind around the plurality of pulleys included in the pulley block to implement cooperation between the pull rope 13 and the pulley structure 123. One end that is of the pull rope 13 and that is away from the spring balancer 14 may be fastened on the cantilever beam 121, or may be fastened on the movable pulley 1232.

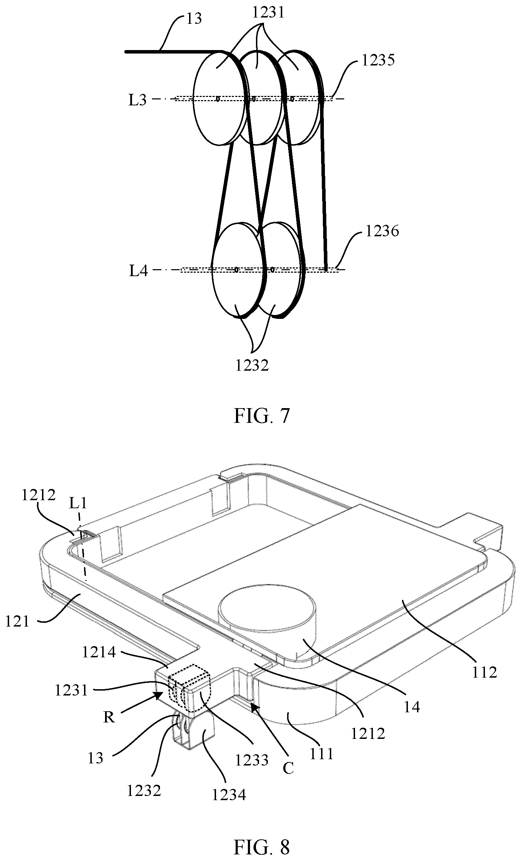

For example, as shown in FIG. 7, the pulley structure 123 includes three fixed pulleys 1231 and two movable pulleys 1232. The three fixed pulleys 1231 are coaxially installed on the cantilever beam 121, and all the three fixed pulleys 1231 may rotate around the third axis L3. The two movable pulleys 1232 are also coaxially disposed, and both the two movable pulleys 1232 may rotate around a fourth axis L4. It is assumed that the three fixed pulleys 1231 are coaxially connected through a first rotating shaft 1235, the two movable pulleys 1232 are coaxially connected through a second rotating shaft 1236, the first rotating shaft 1235 and the second rotating shaft 1236 are shown by using dashed lines, and the first rotating shaft 1235 and the second rotating shaft 1236 are disposed in parallel. One end that is of the pull rope 13 and that is away from the spring balancer 14 may be fastened on the second rotating shaft 1236 after successively passing through the left fixed pulley 1231, the left movable pulley 1232, the middle fixed pulley 1231, the right movable pulley 1232, and the right fixed pulley 1231. The two movable pulleys 1232 may be configured to mount the charging cable 3.

The pulley structure 123 shown in FIG. 7 is used as an example. When the pulley structure 123 includes a pulley block including a plurality of fixed pulleys 1231 and a plurality of movable pulleys 1232, the following relationship exists between a quantity of segments of the pull rope 13 located among the plurality of fixed pulleys 1231 and the plurality of movable pulleys 1232 and a force exerted on the charging cable 3:

$$S = \frac{G}{F1} + 1$$

S is the quantity of segments of the pull rope 13 located among the plurality of fixed pulleys 1231 and the plurality of movable pulleys 1232, G is the hanging weight of the charging cable 3, and F1 is a reset force output by the spring balancer 14 to the pull rope 13. If a calculation result of S is not an integer, the result is to be rounded up. A quantity of segments of the pull rope 13 located between the charging cable 3 and the cantilever beam 121 is a multiple of the pulley block. The pulley block shown in FIG. 6b is a two-fold pulley block, the pulley block shown in FIG. 6c is a three-fold pulley block, and the pulley block shown in FIG. 7 is a four-fold pulley block.

FIG. 8 shows an example of a plug cable management apparatus 1 including a pulley structure 123. As shown in FIG. 8, a cantilever beam 121 further includes a protruding portion 1214, and the protruding portion 1214 protrudes from a swing end 1212 in a length direction of the cantilever beam 121. At least a part of internal space of the protruding portion 1214 may form an accommodating inner cavity R. For example, the pulley structure 123 includes a plurality of fixed pulleys 1231 and a first housing 1233 configured to install the plurality of fixed pulleys 1231, and the plurality of fixed pulleys 1231 are coaxially installed in the first housing 1233. The pulley structure 123 further includes a plurality of movable pulleys 1232 and a second housing 1234 configured to install the plurality of movable pulleys 1232, where the plurality of movable pulleys 1232 are coaxially installed in the second housing 1234. The plurality of movable pulleys 1232 are hoisted from the plurality of fixed pulleys 1231 through a pull rope 13, and the plurality of fixed pulleys 1231 and the plurality of movable pulleys 1232 form a pulley block. The plurality of fixed pulleys 1231 of the pulley structure 123 are accommodated in the protruding portion 1214. When the cantilever beam 121 is in an accommodated state, the protruding portion 1214 protrudes from a groove structure C, and the movable pulley 1232 hoisted from the fixed pulley 1231 does not contact a frame 111 to cause interference.

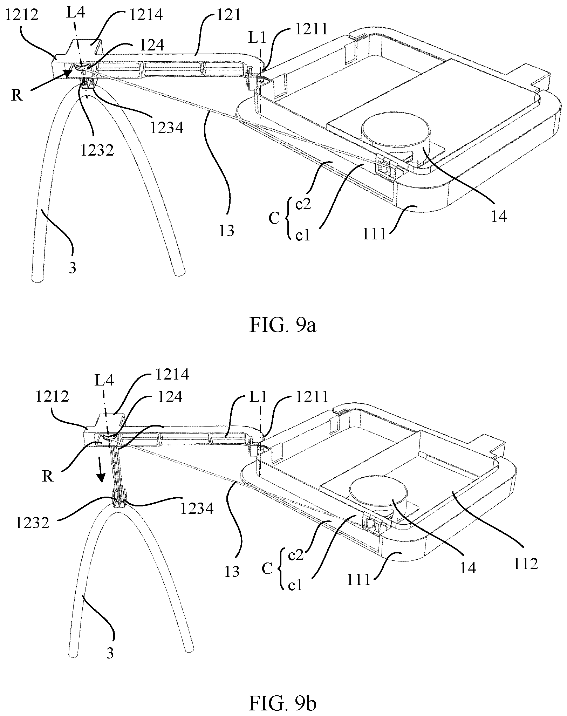

In some embodiments, as shown in FIG. 9a, a cantilever structure 12 further includes a guide pulley 124. The guide pulley 124 may be rotatably installed on the cantilever beam 121 around a fourth axis L4, and the pull rope 13 is disposed around the fixed pulley 1231 of the pulley structure 123 after winding around the guide pulley 124. The fourth axis L4 is parallel to a first axis L1. In FIG. 9a, display of the three-dimensional fourth axis L4 and display of the three-dimensional first axis L1 have specific angle of view distortion. Actually, the two are parallel to each other. The guide pulley 124 may guide an extension direction of the pull rope 13 to be perpendicular to a third axis L3 and parallel to a horizontal direction, so that the pull rope 13 is conveniently wound around the fixed pulley 1231. To install the plurality of movable pulleys 1232, the pulley block 123 includes a second housing 1234 configured to install the movable pulleys 1232. For example, the plurality of movable pulleys 1232 are coaxially installed in the second housing 1234. In some embodiments, one end that is of the pull rope 13 and that is away from a spring balancer 14 may be fastened on the second housing 1234 after winding around the pulley structure 123, and a charging cable 3 may be mounted on the second housing 1234. A hollow frame structure may be selected for the entirety of the cantilever beam 121, so as to reduce a weight of the cantilever beam 121. A plurality of reinforcing ribs distributed in the length direction may be disposed in the cantilever beam 121 to improve structural strength.

The groove structure C that is of the plug cable management apparatus 1 and that is configured to accommodate the cantilever beam 121 includes a bottom wall c1 and one side wall c2. The side wall c2 is located on a bottom side of the bottom wall c1 in a vertical direction. The bottom wall c1 and the side wall c2 form a step-shaped groove structure C. The cantilever beam 121 may be accommodated on a step surface formed by the bottom wall c1 and the side wall c2.

In the plug cable management apparatus 1 shown in FIG. 9a, the pull rope 13 may adjust a height of the charging cable 3 by changing a height of the movable pulley 1232. As shown in FIG. 9b, a user applies a force to the charging cable 3, so that the second housing 1234 moves downward in an arrow direction with the plurality of movable pulleys 1232, and a length of the pull rope 13 among the movable pulleys 1232 and the fixed pulleys 1231 increases, so that the charging cable 3 moves toward a position in the vertical direction, thereby further increasing a movement range of a charging plug 4.

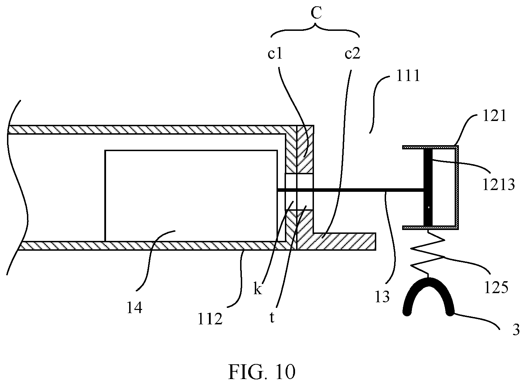

In some embodiments, the charging cable 3 may alternatively be mounted on the cantilever beam 121 in another non-rigid connection form. For example, as shown in FIG. 10, the charging cable 3 is mounted on the cantilever beam 121 by using a spring 125. When a load of the charging cable 3 has a sudden increase and causes overload, the spring 125 may consume a part of load gravity through stretching, to play a buffer role, and avoid damage to a structure of the cantilever beam 121 caused by overload. The spring 125 herein may alternatively be replaced with an elastic structure such as an elastic rope.

In conclusion, the plug cable management apparatus 1 provided in embodiments of this application can fold and extend the charging cable 3 in the horizontal direction through accommodating and expanding of the cantilever structure 12, thereby increasing a use distance of the charging plug 4. The cantilever beam 121 of the cantilever structure 12 is pulled in cooperation with the spring balancer 14, so that the cantilever beam 121 automatically recovers after charging is completed, which helps increase a product life and reduce maintenance work of a worker. When the charging cable 3 is mounted on the cantilever structure 12, the weight of the charging cable 3 may be borne by the cantilever structure 12, to reduce a pulling force that the user needs to exert in a charging process. When the charging cable is mounted by using the pull rope 13 in cooperation with the pulley structure 123, the height of the charging cable 3 in the vertical direction may be adjusted by extending and retracting the pull rope 13, so as to further increase a charging range.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A plug cable management apparatus, wherein the plug cable management apparatus comprises a bracket, a cantilever structure, a pull rope, and a spring balancer;

   the bracket is configured to be fastened on a charging pile;
   the cantilever structure comprises a cantilever beam and a mounting member, the cantilever beam has a rotating end and a swing end, the rotating end of the cantilever beam is rotatably connected to the bracket around a first axis, the first axis is perpendicular to a horizontal direction, the mounting member is installed on the swing end of the cantilever beam, and the mounting member is configured to mount a charging cable of the charging pile;
   the spring balancer is fastened on the bracket, and the spring balancer is configured to output a traction force; and
   one end of the pull rope is connected to a traction force output end of the spring balancer, and the other end of the pull rope is connected to the swing end of the cantilever beam.

2. The plug cable management apparatus according to claim 1, wherein the mounting member comprises an auxiliary cantilever, one end of the auxiliary cantilever is rotatably connected to the swing end of the cantilever beam around a second axis, the other end of the auxiliary cantilever is configured to mount the charging cable, and the second axis is parallel to the first axis.

3. The plug cable management apparatus according to claim 2, wherein a length of the auxiliary cantilever is less than a length of the cantilever beam.

4. The plug cable management apparatus according to claim 2 or 3, wherein one end that is of the pull rope and that is away from the spring balancer is connected to the cantilever beam, and a distance between the second axis and a position that is of the cantilever beam and that is connected to the pull rope is less than a distance between the first axis and the position that is of the cantilever beam and that is connected to the pull rope.

5. The plug cable management apparatus according to any one of claims 1 to 4, wherein the bracket has a groove structure configured to accommodate the cantilever beam, the groove structure has an opening extending in the horizontal direction, and the opening is used for the cantilever beam to rotate into the groove structure or out of the groove structure around the first axis; and
a depth of the groove structure in the horizontal direction is greater than or equal to a width of the cantilever beam, and a height of the groove structure in a vertical direction is greater than or equal to a height of the cantilever beam.

6. The plug cable management apparatus according to claim 5, wherein the groove structure comprises a bottom wall and one side wall, the bottom wall is parallel to the vertical direction, and the side wall is perpendicular to the bottom wall and is connected to a bottom side of the bottom wall in the vertical direction; or
the groove structure comprises a bottom wall and two opposite side walls in the vertical direction, the bottom wall is parallel to the vertical direction, and the two side walls are perpendicular to the bottom wall and are respectively connected to two sides of the bottom wall in the vertical direction.

7. A plug cable management apparatus, wherein the plug cable management apparatus comprises a bracket, a pulley structure, a cantilever beam, a pull rope, and a spring balancer;

   the bracket is configured to be fastened on a charging pile;
   the spring balancer is fastened on the bracket, and the spring balancer is configured to output a traction force;
   the cantilever beam has a rotating end and a swing end, the rotating end of the cantilever beam is rotatably connected to the bracket around a first axis, and the first axis is perpendicular to a horizontal direction;
   the pulley structure is installed on the swing end of the cantilever beam; and
   one end of the pull rope is connected to a traction force output end of the spring balancer, the other end of the pull rope is disposed around the pulley structure, and the pull rope or the pulley structure is configured to mount a charging cable of the charging pile.

8. The plug cable management apparatus according to claim 7, wherein the pulley structure comprises a fixed pulley, the fixed pulley is rotatably installed on the swing end of the cantilever beam around a third axis, and the third axis is perpendicular to the first axis; and
one end that is of the pull rope and that is away from the spring balancer winds around the fixed pulley and is configured to mount the charging cable.

9. The plug cable management apparatus according to claim 7, wherein the pulley structure comprises a pulley block, the pulley block comprises at least one fixed pulley and at least one movable pulley, each fixed pulley is rotatably installed on the swing end of the cantilever beam around a third axis, and the third axis is perpendicular to the first axis; and the at least one movable pulley is hoisted from the at least one fixed pulley by using the pull rope, a rotation axis of each movable pulley is parallel to the third axis, and the at least one movable pulley is configured to mount the charging cable.

10. The plug cable management apparatus according to claim 8 or 9, wherein the plug cable management apparatus further comprises a guide pulley, the guide pulley is rotatably installed on the cantilever beam around a fourth axis, the fourth axis is parallel to the first axis, and the pull rope is disposed around the pulley structure after winding around the guide pulley.

11. The plug cable management apparatus according to any one of claims 7 to 10, wherein the cantilever beam comprises an accommodating inner cavity and a mounting opening in communication with the accommodating inner cavity, the accommodating inner cavity is configured to accommodate the pulley structure and the pull rope, and the mounting opening is used for a part of the pull rope or a part of the pulley structure to extend out.

12. The plug cable management apparatus according to claim 11, wherein the cantilever beam comprises a top plate, a bottom plate, and a connecting plate, the top plate and the bottom plate are opposite in a vertical direction, the connecting plate is connected between the top plate and the bottom plate, the top plate, the bottom plate, and the connecting plate are enclosed to form the accommodating inner cavity, and the mounting opening runs through the bottom plate in the vertical direction.

13. The plug cable management apparatus according to any one of claims 7 to 12, wherein the bracket has a groove structure configured to accommodate the cantilever beam, the groove structure has an opening extending in the horizontal direction, and the opening is used for the cantilever beam to rotate into the groove structure or out of the groove structure around the first axis; and a depth of the groove structure in the horizontal direction is greater than or equal to a width of the cantilever beam, and a height of the groove structure in the vertical direction is greater than or equal to a height of the cantilever beam.

14. The plug cable management apparatus according to claim 13, wherein the groove structure comprises a bottom wall and one side wall, the bottom wall is parallel to the vertical direction, and the side wall is perpendicular to the bottom wall and is connected to a bottom side of the bottom wall in the vertical direction; or the groove structure comprises a bottom wall and two opposite side walls in the vertical direction, the bottom wall is parallel to the vertical direction, and the two side walls are perpendicular to the bottom wall and are respectively connected to two sides of the bottom wall in the vertical direction.

15. A charging pile, wherein the charging pile comprises a main frame body, a charging plug, and a charging cable, one end of the charging cable is connected to the charging plug, the other end of the charging cable is connected to the main frame body, and a slot used to place the charging plug is disposed on a surface of the main frame body; and

the charging pile comprises the plug cable management apparatus according to any one of claims 1 to 6, the bracket of the plug cable management apparatus is fastened on a top of the main frame body, the first axis is parallel to a height direction of the main frame body, and the mounting member is configured to mount the charging cable; or the charging pile comprises the plug cable management apparatus according to any one of claims 7 to 14, the bracket of the plug cable management apparatus is fastened on a top of the main frame body, the first axis is parallel to a height direction of the main frame body, and the pulley structure or the pull rope is configured to mount the charging cable.

FIG. 1a

FIG. 1b

10

FIG. 2

**1**

FIG. 3a

**1**

FIG. 3b

FIG. 4

FIG. 5a

FIG. 5b

FIG. 5c

FIG. 6a

FIG. 6b

FIG. 6c

FIG. 7

FIG. 8

FIG. 9a

FIG. 9b

FIG. 10

Europäisches
Patentamt

European
Patent Office

Office européen
des brevets

# PARTIAL EUROPEAN SEARCH REPORT

under Rule 62a and/or 63 of the European Patent Convention.
This report shall be considered, for the purposes of
subsequent proceedings, as the European search report

**Application Number**

EP 25 18 6597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/047762 A1 (BYTON LTD [CN]; BYTON GMBH [DE]) 18 March 2021 (2021-03-18) | 1,5,6,15 | INV. B60L53/18 |
| Y | * figures 7, 9 * * page 10, lines 12-15 * | 2-4 | H02G11/00 |
| X | ----- EP 4 194 253 A1 (EVTEC AG [CH]) 14 June 2023 (2023-06-14) | 1,15 | ADD. B60L53/31 |
| Y | * paragraphs [0028], [0032], [0034]; figures 2, 6, 10, 11c, 15a * | 2-4 | |
| Y | ----- CA 3 172 705 C (PIRIE CHRISTOPHER IAN [US]; INKPEN KEVIN BRYANT [CA]) 23 January 2024 (2024-01-23) * figure 22A * | 2-4 | |
| Y | ----- US 2015/060611 A1 (TAKAHASHI NORIO [JP] ET AL) 5 March 2015 (2015-03-05) * figures 1a,1b * ----- | 2-4 | |

|  |
|---|
| **TECHNICAL FIELDS SEARCHED (IPC)** |
| B60L H02G |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 21 January 2026 | Hestroffer, Karine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

**INCOMPLETE SEARCH
SHEET C**

```
Claim(s) completely searchable:
        1-6

Claim(s) searched incompletely:
        15

Claim(s) not searched:
        7-14

Reason for the limitation of the search:

The reasons for which claims 7-14 have not been searched are specified in
the annexed opinion accompanying the search results.
```

## ANNEX TO THE EUROPEAN SEARCH REPORT
## ON EUROPEAN PATENT APPLICATION NO.

EP 25 18 6597

21-01-2026

| Patent document cited in search report | | Publication date | Patent family member(s) | | Publication date |
|---|---|---|---|---|---|
| WO 2021047762 | A1 | 18-03-2021 | NONE | | |
| EP 4194253 | A1 | 14-06-2023 | CH | 718444 B1 | 31-01-2023 |
| | | | EP | 4194253 A1 | 14-06-2023 |
| CA 3172705 | C | 23-01-2024 | CA | 3172705 A1 | 16-09-2022 |
| | | | US | 2024010083 A1 | 11-01-2024 |
| | | | WO | 2022193018 A1 | 22-09-2022 |
| US 2015060611 | A1 | 05-03-2015 | JP | 2015047014 A | 12-03-2015 |
| | | | US | 2015060611 A1 | 05-03-2015 |

EPO FORM P0459

For more details about this annex : see Official Journal of the European Patent Office, No. 12/82